# EUROPEAN PATENT SPECIFICATION

(11) **EP 2 407 866 B1**
(45) Date of publication and mention of the grant of the patent: **28.11.2018**
(21) Application number: 10169912.2
(22) Date of filing: 16.07.2010
(51) Int. Cl.: G06F 3/041

(54) **Portable electronic device and method of determining a location of a touch**
Tragbare elektronische Vorrichtung und Verfahren zur Ortsbestimmung einer Berührung
Dispositif électronique portable et procédé pour déterminer l'emplacement d'un effleurement

(43) Date of publication of application: 18.01.2012
(73) Proprietor: BlackBerry Limited, Waterloo, ON N2K 0A7 (CA)
(72) Inventor: Shenfield, Alon, Waterloo Ontario N2L 3X2 (CA)
(74) Representative: Fennell, Gareth Charles

(56) References cited:
- US-A- 5 835 081
- US-A1- 2002 036 618
- US-A1- 2003 063 073
- US-A1- 2006 071 912
- US-A1- 2006 244 733
- US-A1- 2006 267 953
- US-A1- 2007 109 279
- US-A1- 2007 268 269
- US-A1- 2008 062 139
- US-A1- 2009 174 675
- US-A1- 2009 284 495
- US-A1- 2009 309 847
- US-A1- 2010 039 405
- US-A1- 2010 090 976
- US-A1- 2010 095 234
- US-A1- 2010 097 342
- US-A1- 2010 214 231

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 702.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

United States Patent Application 2010/0090976 discloses a method for detecting multiple touch positions on a touch panel that includes the steps of: periodically scanning the touch panel; when detecting a first touch position at a first time during scanning the touch panel, recording coordinates on a first dimensional direction and a second dimensional direction of the first touch position; continuingly scanning the touch panel after the first time; and when detecting a plurality of new possible touch positions at a second time, determining a second touch position from the new possible touch positions according to the recorded coordinates on the first and second dimensional directions of the first touch position.

United States Patent Application 2010/0039405 discloses a projective capacitive touch apparatus and a method for identifying multi-touched positions. The multi-touched positions are touched on a projective capacitive touch panel. The method comprises the following steps: generating a first set of reference values according to the first touch position; generating a plurality of second sets of reference values according to a second touch position, and filtering out at least one ghost second set of reference values from the second sets of reference values. Furthermore, the plurality of second sets of reference values comprise a real second set of reference value and at least one ghost second set of reference values, while the ghost second set of reference values comprises parts of the first set of reference values.

United States Patent Application 2009/0174675 discloses a system and method for locating multiple objects on a capacitive touch pad. The method for determining locations of a plurality of objects contemporaneously interacting with a capacitive touch pad having a sensing region includes generating a first capacitive profile associated with a first object and a second object contemporaneously in the sensing region and determining locations of the first and second objects with respect to the sensing region utilizing the first capacitive profile.

United States Patent Application 2009/0309847 discloses an apparatus and method for providing multi-touch human to computing device interface capability on devices having single-touch interface devices. The apparatus and method use heuristics based analysis of successive touch point X,Y coordinate pairs provided by the single-touch interface device to identify a multi-touch occurrence. A further heuristics based function is employed to derive X,Y coordinates for a second touch point from two successive pairs of X,Y coordinates provided by single-touch interface device.

United States Patent Application 2007/0268269 discloses a sensing technique using a capacitance touch sensor as a user interface. An apparatus for sensing the movement of fingers using a multi-touch sensor includes a touch determination module which determines whether a user has actually touched a touch sensor comprising one or more touch points with at least one of his/her fingers, a clustering module which groups a plurality of electrodes arrayed in the touch sensor into one or more clusters according to a set of standards if the touch determination module determines that the user has actually touched the touch sensor with at least one of his/her finger, a position value calculation module which calculates a finger position value indicating the location of the finger of the user that touches the touch sensor for each of the clusters, and a movement information detection module which detects movement information of the finger of the user that touches the touch sensor using information regarding variations over time in the finger position value.

United States Patent Application 2007/0109279 discloses a method and apparatus for identifying locations on a touch-screen of at least two touch events that occur within a predetermined time of one another.

United States Patent Application 2008/0062139 discloses liquid-crystal display touch screens that integrate touch-sensing elements with display circuitry.

United States Patent Application 2010/0097342 discloses a method of tracking multiple touches over time on a touch sensor.

US 2003/063073 A1 describes touch panel systems and methods that can distinguish temporally overlapping touch inputs from single touch inputs so that valid touch position coordinates can be determined. Touch panel systems and methods distinguish overlapping touches by comparing signal magnitudes to specified thresholds, by comparing the rates of change of signal magnitudes or measured positions to determined parameters, by locating the proximity a calculated location to icons or other such active areas, and the like.

US 2010/095234 A1 describes a method of multi-touch portable electronic device simulation using a non-touchscreen computer input device. The method includes entering a multi-touch simulation mode; recording a first touch motion and a second touch motion using the non-touchscreen computer input device; rendering the recorded first touch motion and second touch motion as a simulated simultaneous multi-touch motion; and generating a sub-routine associated with the simulated simultaneous multi-touch motion.

US 2009/284495 describes matrix-based touch input systems which assess touch locations of two or more temporally overlapping touch inputs by forming valid x-y coordinate pairs from independently determined x- and y-coordinates. Valid x-y pairs are formed based on comparing one or more signal parameters such as signal magnitude, signal strength, signal width, and signal rates of change. In matrix capacitive systems where capacitance-to-ground signals are used to determine the x- and y-coordinates, the determined coordinates may be formed into valid x-y pairs using mutual capacitance measurements. When resolving more than two temporally overlapping touches, information gained by resolving a valid x-y coordinate pair of at least one of the touches may be used to resolve the remaining touches

Improvements in devices with touch-sensitive displays are desirable.

### SUMMARY

Aspects and features of the present invention are set out in the accompanying claims.

A method includes determining when a touch of a plurality of touches overlapping in time on a touch-sensitive display is discontinued, utilizing first touch data prior to the determining to identify a location of the touch, and when the first touch data is not established to be accurate, obtaining second touch data prior to the first touch data to identify the location of the touch. An electronic device includes a touch-sensitive display, memory, and a processor operably coupled to the memory and to the touch-sensitive display to determine a change in number of touches when a touch of two touches is removed from a touch-sensitive display, utilize touch data received from the touch-sensitive display prior to determining the change to determine a location of the touch, and in response to determining that the touch data is associated with a low accuracy level of the touch-sensitive display, obtain previous touch data to determine the location of the touch.

### BRIEF DESCRIPTION OF THE DRAWINGS

FIG. 1 is a block diagram of a portable electronic device in accordance with the present disclosure.
FIG. 2 illustrates examples of touch locations determined when touches are detected on touch-sensitive display in accordance with the disclosure.
FIG. 3 is a flowchart illustrating a method of determining a location of a touch on a touch-sensitive display in accordance with the present disclosure.

### DETAILED DESCRIPTION

The following describes an electronic device and method including determining when a touch of a plurality of touches overlapping in time on a touch-sensitive display is discontinued, utilizing first touch data prior to the determining to identify a location of the touch, and when the first touch data is not established to be accurate, obtaining second: touch data prior to the first touch data to identify the location of the touch.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

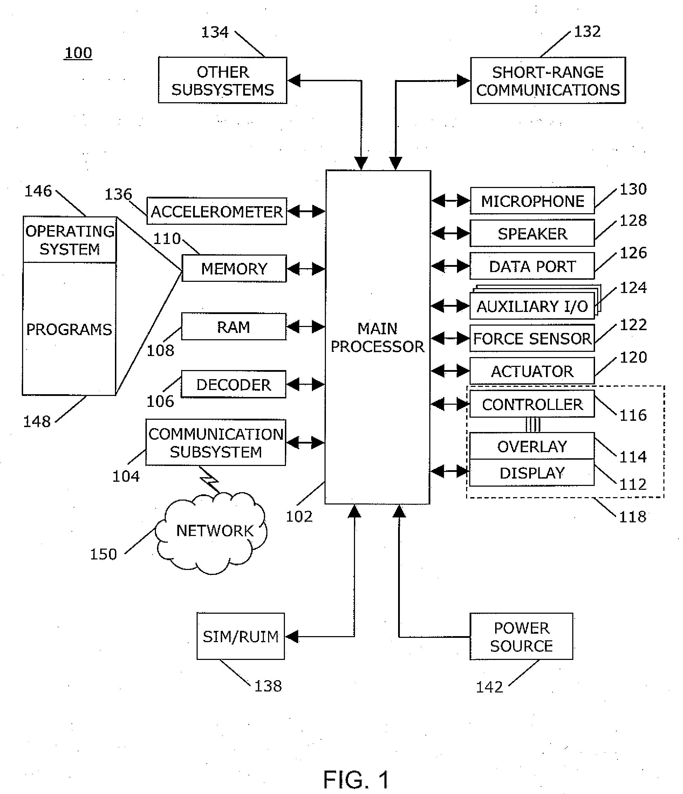

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces. Optionally, the processor 102 may interact with one or more actuators 120 and/or one or more force sensors 122.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be a self capacitive touch-sensitive display. A self capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 receives touch data, including a location of a touch. Touch data may include coordinate values of a single point of contact, such as a point at or near a center of the area of contact. A touch may be detected from any suitable object, such as a finger, thumb or appendage. The controller 116 and/or the processor 102 may detect a touch by any suitable contact member on the touch-sensitive display 118.

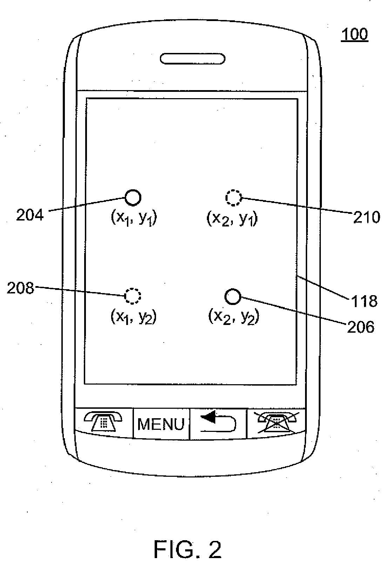

Two touches that overlap in time may be detected. Touches overlap in time when touch contact for one touch continues when another touch begins or when both touches begin and end at the same time. Coordinate values for both touches are included in the touch data and the coordinate values are provided to the processor 102 as pairs of coordinate values. The pairs of coordinate values are repeatedly provided to the processor 102 during the touches. When one of two touches is discontinued, for example, when a finger is lifted from the touch-sensitive display 118, a change in capacitance is detected at the controller 116 during lifting of the finger and may result in mismatch of the coordinate values. When the coordinate values are mismatched, the x coordinate value for one touch is incorrectly paired with the y coordinate value of the other touch and the x coordinate value of the other touch is incorrectly paired with the with the y coordinate value of the one touch. This incorrect pairings are also known as ghost touches or ghost touch locations. An example of two touch locations 204, 206 and corresponding ghost touch locations 208, 210 is shown in FIG. 2. The portable electronic device 100 may not be able to resolve the coordinates of the touches as the coordinates, x1, y1, of one touch 204, and the coordinates, x2, y2, of the other touch 206 may be incorrectly paired to provide the coordinate pair x1, y2 of one ghost touch 208 and the coordinate pair x2, y1 of the other ghost touch 210.

The optional actuator(s) 120, shown in FIG. 1, may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

The optional force sensor(s) 122 may provide force information related to a detected touch. The force information may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

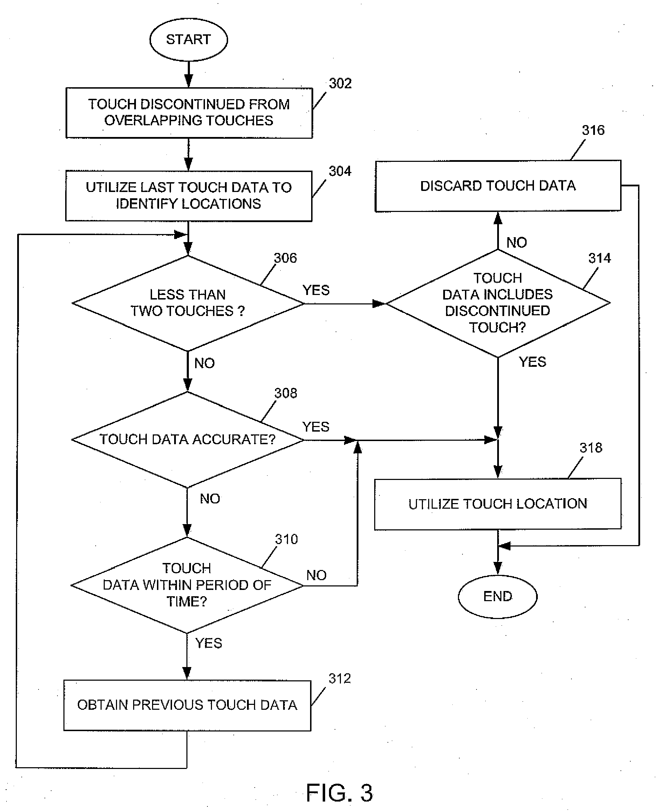

A flowchart illustrating a method of determining a location of a touch on a touch-sensitive display is shown in FIG. 3. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order. A computer-readable medium having computer-readable code may be executable by at least the processor 102 to perform the method. The process may be carried out in on any displayed screen, such as a home screen or preferences menu, any suitable application, such as, email, text messaging, calendar, tasks, address book, or any other suitable application, and so forth.

When at least two touches that overlap in time are detected, for example utilizing the touch-sensitive display 118, one of the touches is detected as discontinued 302. A touch is discontinued when touch data for one of two touches is no longer provided to the processor 102. The touch data may be stored as coordinate pairs in a buffer, such as in the processor 102 or memory 110. Discontinuation of one of the touches may be determined by comparison of the number of coordinate pairs in the touch data provided to the processor to the number of coordinate pairs provided in the previous touch data, e.g., during a prior sample interval. The location of the remaining touch may be accurately determined based on the touch data provided to the processor when the other touch is discontinued, which touch data includes a single coordinate pair. Because a single coordinate pair is included in the touch data, incorrect pairing does not occur and the touch data is established to be accurate for the remaining touch.

The touch data, i.e., the touch data collected prior to discontinuation of the touch, is retrieved from the buffer and is utilized 304 to identify the touch locations for the two touches, including the discontinued touch. When the touch data includes coordinate values for two or more touches at 306, the process continues at 308. The previous touch data is established as accurate at 308, the process continues at 318.

Accuracy of the touch data is established at 308. Accuracy of touch data, for example, may be based on whether the overlapping touch locations are resolvable. For example, the touch data may be established to be accurate based on an identifier associated with or included in the touch data. The identifier may be, for example, a flag, such as a Boolean flag, that identifies touch data in which the touch locations may not be accurately resolved. The flag may be set at the controller 116, for example, based on the number of overlapping touches, movement of a touch or touches, changes in touch signals as a result of changes in capacitive coupling at the time the touch data is collected, and/or other information indicating that the touch locations may not necessarily be correct or x, y coordinate pairs are conclusively resolved. Touch data is established to be accurate when the identifier or flag is not set, i.e., touch data is not established to be accurate when the identifier or flag is set.

When the touch data is not established to be accurate at 308, and the touch data is collected within a predetermined period of time 310, the process continues at 312. The touch data is not collected within the predetermined period of time when the time between collecting the touch data and determining that the touch is discontinued is greater than the predetermined period of time, for example, within 50 ms. When the touch data is not collected within the predetermined period of time, the process continues at 318.

Previous touch data is obtained 312 from the buffer and is utilized to identify the touch locations for at least the discontinued touch, and the process continues at 306. The previous touch data obtained at 312 is the touch data collected immediately previous to the touch data currently being evaluated, i.e., the touch data taken in time immediately previous to the touch data evaluated at 306, 308, 310 before 312. Earlier touch data may repeatedly be obtained from the buffer until the touch data includes coordinate values for less than two touches, the touch data is established to be accurate, or the touch data falls outside the predetermined period of time.

When the touch data includes coordinate values for less than two touches (i.e., 0 or 1 touch) at 306, and the touch data includes 314 the coordinates of the discontinued touch, the process continues at 318. When the touch data includes coordinate values for less than two touches at 306, and the touch data does not include 314 the coordinates of the discontinued touch, the touch data is discarded 316, and a touch location is not identified.

The touch location of the discontinued touch is identified, and the touch location, identified by the coordinates of the touch data, is utilized 318 with respect to information associated with the touch location. A function may be performed based on the touch location. For example, a feature displayed on the touch-sensitive display 118 may be selected, such as a virtual key, button, or menu item.

When one of two overlapping touches on a touch-sensitive display is discontinued, coordinate values of the touches may be mismatched, and the last location of the departed touch may not be resolved or resolved accurately. A function associated with the touch location may not be performed or an incorrect function associated with a ghost touch location may be performed when the touches are not accurately resolved. The use of previous touch data facilitates identification of the touch location.

The present disclosure may be embodied in other specific forms without departing from its essential characteristics. The described embodiments are to be considered in all respects only as illustrative and not restrictive. The scope of the present disclosure is, therefore, indicated by the appended claims. All changes that come within the meaning and range of equivalency of the claims are to be embraced within their scope.

## Claims

1. A method comprising:
determining (302) a change in number of touches when a first touch of a plurality of touches overlapping in time on a touch-sensitive display (118) is discontinued;
utilizing (304) first touch data collected prior to the determining to identify a location of the discontinued touch;
determining (308) that the first touch data is not established to be accurate by determining that a location of at least one of the touches is not resolvable, wherein an identifier is associated with or included in the first touch data when the first touch data is not established to be accurate;
obtaining (312) second touch data collected prior to the first touch data to identify the location of the discontinued touch;
determining (306, 314) which of the touches the touch data is associated with when the second touch data comprises touch data from a single touch; and
discarding (316) the second touch data when the second touch data is associated with a single touch that is a second touch of the overlapping touches.

2. The method according to claim 1, wherein, when the second touch data is not established to be accurate, obtaining third touch data collected prior to the second touch data.

3. The method according to claim 1, obtaining within a predetermined period of time of determining, previous touch data when prior touch data is not established to be accurate.

4. The method according to claim 1, comprising making a selection associated with the second touch data when the second touch data is associated with a single touch.

5. The method according to claim 1, comprising making a selection associated with the second touch data when the second touch data comprises touch data not received within a predetermined period of time of determining.

6. The method according to claim 1, comprising obtaining previous touch data until one of a determination is made that the previous touch data is established to be accurate and the touch data is not within the predetermined period of time of determining.

7. The method according to claim 1, wherein the touch data is established to be accurate when a location of each of the touches is resolved.

8. The method according to claim 1, wherein a flag is set to identify the touch data when the touch data is not established to be accurate.

9. A computer-readable medium having computer-readable code executable by at least one processor of a portable electronic device to perform the method according to any of claims 1 to 8.

10. A portable electronic device (100) comprising:
a touch-sensitive display (118);
a memory (110);
a processor (102) operably coupled to the memory (110) and to the touch-sensitive display (118) to determine a change in number of touches when a touch of a plurality of touches is removed from the touch-sensitive display (118), utilize touch data received from the touch-sensitive display (118) prior to determining the change to determine a location of the discontinued touch, and, in response to determining that the touch data is associated with a low accuracy level of the touch-sensitive display (118) by determining that a location of at least one of the touches is not resolvable, wherein an identifier is associated with or included in the first touch data when the first touch data is not established to be accurate, obtain previous touch data to determine the location of the discontinued touch, determine which of the touches the touch data is associated with when the second touch data comprises touch data from a single touch and
discard the second touch data when the second touch data is associated with a single touch that is a second touch of the overlapping touches.

11. The portable electronic device according to claim 10, wherein the touch-sensitive display (118) comprises a self capacitance touch-sensitive display.

## Patentansprüche

1. Ein Verfahren, das aufweist:
Bestimmen (302) einer Änderung in einer Anzahl von Berührungen, wenn eine erste Berührung einer Vielzahl von Berührungen, die sich zeitlich überlappen, auf einer berührungsempfindlichen Anzeige (118) beendet wird;
Verwenden (304) von ersten Berührungsdaten, die vor dem Bestimmen gesammelt wurden, um eine Position der beendeten Berührung zu identifizieren;
Bestimmen (308), dass die ersten Berührungsdaten nicht als genau anzusehen sind, durch Bestimmen, dass eine Position von zumindest einer der Berührungen nicht auflösbar ist, wobei ein Identifizierer mit den ersten Berührungsdaten assoziiert ist oder darin enthalten ist, wenn die ersten Berührungsdaten nicht als genau anzusehen sind;
Erlangen (312) von zweiten Berührungsdaten, die vor den ersten Berührungsdaten gesammelt wurden, um die Position der beendeten Berührung zu identifizieren;
Bestimmen (306, 314), mit welchen der Berührungen die Berührungsdaten assoziiert sind, wenn die zweiten Berührungsdaten Berührungsdaten von einer einzelnen Berührung aufweisen; und
Verwerfen (316) der zweiten Berührungsdaten, wenn die zweiten Berührungsdaten mit einer einzelnen Berührung assoziiert sind, die eine zweite Berührung der überlappenden Berührungen ist.

2. Das Verfahren gemäß Anspruch 1, wobei, wenn die zweiten Berührungsdaten nicht als genau anzusehen sind, Erlangen von dritten Berührungsdaten, die vor den zweiten Berührungsdaten gesammelt werden.

3. Das Verfahren gemäß Anspruch 1, Erlangen, innerhalb einer vorgegebenen Zeitperiode des Bestimmens, von vorherigen Berührungsdaten, wenn vorherige Berührungsdaten nicht als genau anzusehen sind.

4. Das Verfahren gemäß Anspruch 1, das ein Treffen einer Auswahl aufweist, die mit den zweiten Berührungsdaten assoziiert ist, wenn die zweiten Berührungsdaten mit einer einzelnen Berührung assoziiert sind.

5. Das Verfahren gemäß Anspruch 1, das ein Treffen einer Auswahl aufweist, die mit den zweiten Berührungsdaten assoziiert ist, wenn die zweiten Berührungsdaten Berührungsdaten aufweisen, die nicht innerhalb einer vorgegebenen Zeitperiode des Bestimmens empfangen werden.

6. Das Verfahren gemäß Anspruch 1, das ein Erlangen von vorherigen Berührungsdaten aufweist, bis eine aus einer Bestimmung gemacht ist, dass die vorherigen Berührungsdaten als genau anzusehen sind, und dass die Berührungsdaten nicht innerhalb der vorgegebenen Zeitperiode des Bestimmens sind.

7. Das Verfahren gemäß Anspruch 1, wobei die Berührungsdaten als genau anzusehen sind, wenn eine Position von jeder der Berührungen aufgelöst wird.

8. Das Verfahren gemäß Anspruch 1, wobei ein Flag gesetzt wird, um die Berührungsdaten zu identifizieren, wenn die Berührungsdaten nicht als genau anzusehen sind.

9. Computerlesbares Medium mit computerlesbarem Code, der durch zumindest einen Prozessor einer tragbaren elektronischen Vorrichtung ausführbar ist, um das Verfahren gemäß einem der Ansprüche 1 bis 8 durchzuführen.

10. Eine tragbare elektronische Vorrichtung (100), die aufweist:
eine berührungsempfindliche Anzeige (118);
ein Speicher (110);
einen Prozessor (102), der betriebsfähig mit dem Speicher (110) und mit der berührungsempfindlichen Anzeige (118) gekoppelt ist zum Bestimmen einer Änderung der Anzahl von Berührungen, wenn eine Berührung aus einer Vielzahl von Berührungen von der berührungsempfindlichen Anzeige (118) entfernt wird, Verwenden von Berührungsdaten, die von der berührungsempfindlichen Anzeige (118) empfangen werden, vor dem Bestimmen der Änderung, um einen Position der beendeten Berührung zu bestimmen, und in Reaktion auf das Bestimmen, dass die Berührungsdaten mit einem niedrigen Genauigkeitsgrad der berührungsempfindlichen Anzeige (118) assoziiert sind, durch Bestimmen,
dass eine Position von zumindest einer der Berührungen nicht auflösbar ist, wobei ein Identifizierer mit den ersten Berührungsdaten assoziiert ist oder in diesen enthalten ist, wenn die ersten Berührungsdaten nicht als genau anzusehen sind, Erlangen von vorherigen Berührungsdaten, um die Position der beendeten Berührung zu bestimmen, Bestimmen, mit welchen der Berührungen die Berührungsdaten assoziiert sind, wenn die zweiten Berührungsdaten Berührungsdaten von einer einzelnen Berührung aufweisen, und Verwerfen der zweiten Berührungsdaten, wenn die zweiten Berührungsdaten mit einer einzelnen Berührung assoziiert sind, die eine zweite Berührung der überlappenden Berührungen ist.

11. Die tragbare elektronische Vorrichtung gemäß Anspruch 10, wobei die berührungsempfindliche Anzeige (118) eine selbstkapazitive berührungsempfindliche Anzeige aufweist.

## Revendications

1. Procédé consistant à :
déterminer (302) une modification du nombre de touchers lorsqu'un premier toucher d'une pluralité de touchers se chevauchant dans le temps sur un affichage tactile (118) ne se fait plus ;
utiliser (304) des données de premier toucher recueillies avant la détermination afin d'identifier un emplacement du toucher ne se faisant plus ;
déterminer (308) que les données de premier toucher ne sont pas établies comme étant précises en déterminant qu'un emplacement d'au moins un des touchers ne peut être reconnu, où un identifiant est associé à, ou inclus dans, les données de premier toucher lorsque les données de premier toucher ne sont pas établies comme étant précises ;
obtenir (312) des données de deuxième toucher recueillies avant les données de premier toucher pour identifier l'emplacement du toucher ne se faisant plus ;
déterminer (306, 314) auquel des touchers les données de toucher sont associées lorsque les données de deuxième toucher comprennent des données de toucher provenant d'un seul toucher ; et
mettre au rebut (316) les données de deuxième toucher lorsque les données de deuxième toucher sont associées à un seul toucher qui est un deuxième toucher des touchers qui se chevauchent.

2. Procédé selon la revendication 1, dans lequel, lorsque les données de deuxième toucher ne sont pas établies comme étant précises, sont obtenues des données de troisième toucher recueillies avant les données de deuxième toucher.

3. Procédé selon la revendication 1, comprenant l'obtention, au sein d'une durée prédéterminée de détermination, de données de toucher précédent lorsque les données de toucher précédent ne sont pas établies comme étant précises.

4. Procédé selon la revendication 1, comprenant la réalisation d'une sélection associée aux données de deuxième toucher lorsque les données de deuxième toucher sont associées à un seul toucher.

5. Procédé selon la revendication 1, comprenant la réalisation d'une sélection associée aux données de deuxième toucher lorsque les données de deuxième toucher comprennent des données de toucher non reçues au sein d'une durée prédéterminée de détermination.

6. Procédé selon la revendication 1, comprenant l'obtention de données de toucher précédent jusqu'à ce qu'il soit déterminé que les données de toucher précédent sont établies comme étant précises et les données de toucher n'entrent pas dans la durée prédéterminée de détermination.

7. Procédé selon la revendication 1, dans lequel les données de toucher sont établies comme étant précises lorsqu'un emplacement de chacun des touchers est reconnu.

8. Procédé selon la revendication 1, dans lequel un drapeau est placé pour identifier les données de toucher lorsque les données de toucher ne sont pas établies comme étant précises.

9. Support pouvant être lu par ordinateur comportant un code pouvant être lu par ordinateur, exécutable par au moins un processeur d'un dispositif électronique portable pour mettre en oeuvre le procédé selon l'une quelconque des revendications 1 à 8.

10. Dispositif électronique portable (100) comprenant :
un affichage tactile (118) ;
une mémoire (110) ;
un processeur (102) fonctionnellement couplé à la mémoire (110) et à l'affichage tactile (118) pour déterminer une modification du nombre de touchers lorsqu'un toucher d'une pluralité de touchers est supprimé de l'affichage tactile (118), utiliser des données de toucher reçues de l'affichage tactile (118) avant de déterminer la modification pour déterminer un emplacement du toucher qui ne se fait plus, et, en réponse, déterminer que les données de toucher sont associées à un faible niveau de précision de l'affichage tactile (118) en déterminant qu'un emplacement d'au moins un des touchers ne peut être reconnu, où un identifiant est associé à, ou inclus dans, les données de premier toucher lorsque les données de premier toucher ne sont pas établies comme étant précises, obtenir des données de toucher précédent pour déterminer l'emplacement du toucher ne se faisant plus, déterminer auquel des touchers les données de toucher sont associées lorsque les données de deuxième toucher comprennent des données de toucher provenant d'un seul toucher et mettre au rebut les données de deuxième toucher lorsque les données de deuxième toucher sont associées à un seul toucher qui est un deuxième toucher des touchers qui se chevauchent.

11. Dispositif électronique portable selon la revendication 10, dans lequel l'affichage tactile (118) comprend un affichage tactile à auto-capacitance.
